# EUROPÄISCHE PATENTSCHRIFT

(11) **EP 2 176 719 B1**
(45) Veröffentlichungstag und Bekanntmachung des Hinweises auf die Patenterteilung: **29.08.2012**
(21) Anmeldenummer: 08786022.7
(22) Anmeldetag: 10.07.2008
(51) Int. Cl.: G01D 21/00, H04L 12/40, G05B 19/042, H04L 12/00, G05F 1/565, G01D 3/08

(54) **FELDBUSEINHEIT FÜR EINEN ZWEI-LEITER-FELDBUS**
FIELDBUS UNIT FOR A TWO-CONDUCTOR FIELDBUS
UNITÉ DE BUS DE TERRAIN POUR UN BUS DE TERRAIN À DEUX FILS

(30) Priorität: 02.08.2007 DE 102007036580
(43) Veröffentlichungstag der Anmeldung: 21.04.2010
(73) Patentinhaber: Endress+Hauser Flowtec AG, 4153 Reinach (CH)
(72) Erfinder: SIMON, Antoine, F-68300 St. Louis (FR)
(74) Vertreter: Andres, Angelika Maria
(86) Internationale Anmeldenummer: PCT/EP2008/058965
(87) Internationale Veröffentlichungsnummer: WO 2009/016014

(56) Entgegenhaltungen:
- JP-A- 2005 012 680

## Beschreibung

Die Erfindung betrifft eine Feldbuseinheit gemäß dem Oberbegriff des Anspruchs 1 sowie ein Feldgerät gemäß Anspruch 7. Des weiteren betrifft die Erfindung eine Feldbuseinheit gemäß dem Oberbegriff des Anspruchs 8 sowie ein Feldgerät gemäß Anspruch 15.

in der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Zur Beeinflussung von Prozessvariablen dienen Aktoren, z. B. Ventile oder Pumpen über die der Durchfluss einer Flüssigkeit in einem Rohrleitungsabschnitt bzw. der Füllstand in einem Behälter geändert werden kann.

Als Feldgeräte werden im Prinzip alle Geräte bezeichnet, die prozessnah eingesetzt werden und die prozessrelevante Informationen liefern oder verarbeiten.

Eine Vielzahl solcher Feldgeräte wird von der Firma Endress+Hauser hergestellt und vertrieben.

In der Regel sind Feldgeräte in modernen Industrieanlagen über Bussysteme (Profibus, Foundation Fieldbus, etc) mit übergeordneten Einheiten (Leitsystemen oder Steuereinheiten) verbunden. Diese übergeordneten Einheiten dienen unter anderem zur Prozesssteuerung, Prozessvisualisierung, Prozessüberwachung sowie zur Inbetriebnahme der Feldgeräte.

In Gefährdungsbereichen werden insbesondere Zwei-Leiter Feldbusse wie beispielsweise Profibus-PA oder Fieldbus-Foundation Busse eingesetzt, bei denen sowohl die Stromversorgung des Feldgeräts als auch die Datenübertragung vom Feldgerät (Slave) zur übergeordneten Einheit (Master) über zwei Leiter erfolgt. Wenn das jeweilige Feldgerät Messdaten zum Master übertragen will, wird dem Stromfluss durch das Feldgerät eine entsprechende Strommodulation aufgeprägt. Durch Analyse dieser Strommodulation kann der Master die Daten vom Feldgerät erhalten.

Bei den Lösungen des Stands der Technik erfolgt die Strommodulation mittels eines Stromsteuertransistors. Zur Erzeugung der Strommodulation wird der Basisstrom des Stromsteuertransistors entsprechend einem Stromsteuersignal variiert. Allerdings weisen die Feldbuseinheiten des Stands der Technik den Nachteil auf, dass beim Hochstarten noch kein Basisstrom für den Stromsteuertransistor zur Verfügung steht, da die Feldbuseinheit noch nicht mit Strom versorgt ist. Deshalb ist der Stromsteuertransistor anfangs gesperrt. Um das Feldgerät dennoch hochstarten zu können, sind bei einigen Lösungen des Stands der Technik Bypassschaltungen vorgesehen, die den Stromsteuertransistor anfangs beim Hochstarten überbrücken und die Schaltungskomponenten der Feldbuseinheit während des Hochstartens mit Strom versorgen.

Aus der EP 1 158 274 A1 sind gesteuerte Stromquellen von Zwei-Leiter-Messgeräten bekannt geworden, die den beim Einschalten einer Gleichspannungquelle benötigten höhren Energiebedarf bereitstellen.

Derartige Bypassschaltungen sind aufwändig und teuer. Beispielsweise müssen schaltungstechnische Vorkehrrungen getroffen werden, um die Bypassschaltung nach dem Hochstarten wieder auszuschalten, oder zumindest zu verhindern, dass der von der Bypassschaltung aufgenommene Strom die Strommodulation auf dem Feldbus stört. Ein weiterer Nachteil ist, dass die Bypassschaltung in der Lage sein muss, die relative hohe Busspannung, z.B. bis zu 35V gemäß der IEC61158-2 Norm, Abschnitt 12.7.2, zu verarbeiten, was ebenfalls zusätzlichen schaltungstechnischen Aufwand bedeutet.

Aus der JP 2005 012680 A1 ist eine Feldbuseinheit zum Anschluss eines Feldgeräts an einen zwei Leiter umfassenden Feldbus gemäß Oberbegriff des Anspruchs 1 bekannt.

Aufgabe der Erfindung ist es, eine Feldbuseinheit zum Anschluss an einen Zwei-Leiter-Feldbus zur Verfügung zu stellen, welche bei geringem Schaltungsaufwand ein zuverlässiges Hochstarten des Feldgeräts ermöglicht.

Gelöst wird diese Aufgabe durch die in den Ansprüchen 1 und 8 angegebenen Merkmale.

Vorteilhafte Weiterentwicklungen der Erfindung sind in den Unteransprüchen angegeben.

Bei den Lösungen des Stands der Technik wurde der Basisstrom des Stromsteuertransistors von einem in Emitterschaltung betriebenen Ansteuertransistor gesteuert. Ein Stromsteuersignal wurde mit der Basis des Ansteuertransistors verbunden, und der Basisstrom für den Stromsteuertransistor wurde über den Emitter-Kollektor-Strompfad des Ansteuertransistors geführt.

Im Gegensatz dazu wird bei der erfindungsgemäßen Lösung die Basis (bzw. das Gate) des Ansteuertransistors auf einem im wesentlichen konstanten Potenzial gehalten. Der Ansteuertransistor wird also in Basisschaltung betrieben. Das Stromsteuersignal wird über den Emitter-Kollektor-Strompfad (bzw. Source-Drain-Strompfad) des Ansteuertransistors eingekoppelt.

Diese Ansteuerschaltung hat den Vorteil, dass auch dann, wenn noch kein Stromsteuersignal vorhanden ist, bereits ein Basisstrom für den Stromsteuertransistor geliefert wird. Dies kann durch entsprechende Wahl des Potenzials der Basis (bzw. des Gate) erreicht werden. Auf diese Weise wird der Stromsteuertransistor beim Hochfahren sofort leitend geschaltet und kann die verschiedenen Schaltungskomponenten der Feldbuseinheit mit Strom versorgen, ohne dass hierfür eine Bypassschaltung vorgesehen werden müsste. Die bisher erforderliche Bypassschaltung kann daher entfallen, was eine wesentliche Vereinfachung der Ansteuerschaltung bedeutet. Außerdem wird die Realisierung der Ansteuerschaltung auf einer Integrierten Schaltung vereinfacht.

Die Verwendung eines in Basisschaltung betriebenen Ansteuertransistors hat darüber hinaus den Vorteil, dass die Stromverstärkung in der Ansteuerschaltung deutlich geringer ist als bei den Lösungen des Stands der Technik, was eine genauere Steuerung des vom Feldgerät aufgenommenen Stroms ermöglicht. Als Folge davon wird die dynamische Impedanz der Feldbuseinheit verbessert.

Nachfolgend ist die Erfindung anhand von mehreren in der Zeichnung dargestellten Ausführungsbeispielen näher erläutert.

Es zeigen:

Fig. 1 Profibus-Netzwerk in schematischer Darstellung;

Fig. 2 Blockschaltbild einer Feldbuseinheit für Zwei-Leiter-Feldgeräte;

Fig. 3A erste Ausführungsform der erfindungsgemäßen Ansteuerschaltung;

Fig. 3B zweite Ausführungsform der erfindungsgemäßen Ansteuerschaltung; und

Fig. 4 detaillierte Darstellung einer erfindungsgemäßen Feldbuseinheit.

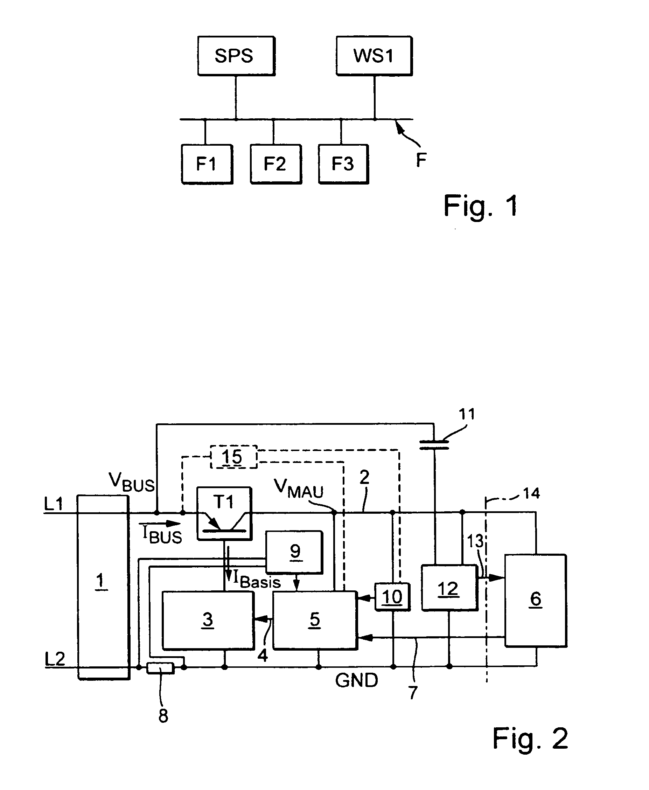

In Fig. 1 ist ein Profibus-Netzwerk mit drei Feldgeräten F1, F2, F3, einer Steuereinheit SPS und einer weiteren übergeordneten Einheit WS1 dargestellt, die über einen Feldbus F Daten austauschen.

Bei dem in Fig. 1 gezeigten Profibus-Netzwerk könnte es sich beispielsweise um eine Überfüllsicherung bei einem Flüssigkeitstank handeln. Das Feldgerät F1 misst den Füllstand in einem Behälter. Das Feldgerät F2 ist ein Ventil und regelt den Abfluss der Flüssigkeit aus dem Behälter. Weiterhin ist noch als Grenzstandschalter das Feldgerät F3 vorgesehen, welches den maximalen Füllstand im Behälter erfasst. Ein Steuerprogramm in der Steuereinheit SPS, die z. B. eine SPS-Einheit (Speicherprogrammierbare Steuerung) oder eine PLC-Einheit (Programmable Logic Controller) sein kann, regelt den Füllstand in dem Behälter. Die Steuereinheit SPS ist ein Profibus-Master, während die Feldgeräte F1, F2, F3 Profibus-Slaves sind.

Feldbusse, die zwei Leiter umfassen, werden insbesondere zur Anbindung von Feldgeräten in Gefährdungsbereichen, beispielsweise in explosionsgefährdeten Bereichen, eingesetzt. Das jeweilige Feldgerät besitzt keine eigene Stromversorgung und wird über die beiden Leiter des Feldbusses mit Strom versorgt. Darüber hinaus wird auch der Datenaustausch zwischen einer Steuereinheit (Master) und dem Feldgerät (Slave) in beiden Richtungen über die zwei Leiter des Feldbusses abgewickelt. Dabei wird die Spannung auf dem Feldbus durch die Steuereinheit, also den Master, kontrolliert. Die vom Master zum Feldgerät zu übertragenden Daten, beispielsweise Messdaten, die von einem physikalisch-elektrischen Sensorelement erfasst wurden, werden dem Spannungssignal vom Master aufmoduliert, und zwar vorzugsweise in Form eines sogenannten Manchester-Codes. Das im Slave-Modus betriebene Feldgerät ist dagegen nicht berechtigt, die vom Master festgelegte Spannung auf dem Feldbus zu modifizieren. Zur Datenübertragung in Richtung vom Feldgerät zum Master prägt das Feldgerät dem vom Feldbus aufgenommenen Strom eine Strommodulation auf, und zwar vorzugsweise ebenfalls im Manchester-Code. Diese Strommodulation kann dann vom Master detektiert werden. Auf diese Weise ist ein Datenaustausch vom Feldgerät zum Master möglich, ohne dass das Feldgerät die Spannung auf dem Feldbus verändert.

In Fig. 2 ist eine erfindungsgemäße Feldbuseinheit für einen Zwei-Leiter-Feldbus dargestellt. Die beiden Leiter L1, L2 des Feldbusses sind auf der linken Seite von Fig. 2 eingezeichnet. Diese beiden Leiter sind über eine Entstör- und Gleichrichtereinheit 1 an die Feldbuseinheit angeschlossen. Die Entstör- und Gleichrichtereinheit 1 umfasst einen Gleichrichter sowie einen Entstörfilter zur Unterdrückung von elektromagnetischen Störungen. Die Entstör- und Gleichrichtereinheit 1 kann auch ein Überstromschutzelement, wie eine Sicherung oder ein FDE (Fault Disconnect Equipment) enthalten. Darüber hinaus ermöglicht die Entstör- und Gleichrichtereinheit 1 eine Entkopplung der Feldbuseinheit vom Feldbus. Durch den Feldbus wird der Feldbuseinheit eine Busspannung V_{Bus} sowie ein Schaltungsnullpunkt GND zur Verfügung gestellt. Die Busspannung V_{Bus} liegt am Emitter eines Stromsteuertransistors T1 an. Der Stromsteuertransistor T1 ist das Herzstück der in Fig. 2 gezeigten Feldbuseinheit. Der Stromsteuertransistor T1 steuert den durch das Feldgerät fließenden Busstrom I_{Bus}. Der Stromsteuertransistor T1 ist insbesondere dafür zuständig, dem vom Feldbus abgezweigten Strom eine Strommodulation aufzuprägen, um so Information vom Feldgerät zum Master zu übertragen. Der über die Emitter-Kollektor-Strecke von T1 fließende Busstrom I_{Bus} wird durch den Basisstrom I_{Basis} von T1 gesteuert. Durch Variieren des Basisstroms I_{Basis} kann die Stromaufnahme des Feldgeräts gesteuert und eine gewünschte Strommodulation aufgeprägt werden.

Wenn die Emitter-Kollektor-Strecke des Stromsteuertransistor T1 durchgeschaltet ist, steht am Kollektor von T1 die Versorgungsspannung V_{MAU} zur Verfügung, welche die an die Versorgungsleitung 2 angeschlossenen Funktionsblöcke mit Strom versorgt. Dabei steht "MAU" für "Medium Attachment Unit" gemäß der IEC61158-2 Norm.

Im zeitlichen Mittel fließt ein Strom von beispielsweise 11 mA durch das Feldgerät. Während der Strommodulation werden dem Feldbus Ströme von 11 mA ± 9 mA aufgeprägt, es fließen also abwechselnd Ströme von 2 mA oder von 20 mA durch die Feldbuseinheit. Zur Steuerung des Stroms ist eine Ansteuerschaltung 3 vorgesehen, die den Basisstrom I_{Basis} des Transistors T1 und damit auch den Busstrom I_{Bus} entsprechend einem Stromsteuersignal 4 steuert. Das Stromsteuersignal 4 wird von einem Stromkontroller 5 erzeugt. Die aufzumodulierende Information wird dem Stromkontroller 5 von einer digitalen Signalverarbeitungseinheit 6 als Digitalsignal 7 zur Verfügung gestellt. Der Strom wird dann durch den Stromkontroller 5 entsprechend diesem Digitalsignal 7 moduliert.

Der aktuelle Wert des Stroms, der durch die Feldbuseinheit fließt, wird mit Hilfe eines niederohmigen Strommesswiderstands 8 ermittelt. Die über dem Strommesswiderstand 8 abfallende Spannung wird durch eine Strombestimmungseinheit 9 ausgewertet, und der so ermittelte Iststrom wird dem Stromkontroller 5 zur Verfügung gestellt. Darüber hinaus ist eine Referenzspannungseinheit 10 vorgesehen, die dem Stromkontroller 5 eine oder mehrere Referenzspannungen zur Verfügung stellt.

Wie oben bereits beschrieben wurde, erfolgt die Informationsübertragung in umgekehrter Richtung, also vom Master zum Feldgerät, durch Aufmodulieren der Informationen auf die Busspannung V_{Bus}. Zum Empfangen dieser aufmodulierten Daten gelangt der aufmodulierte Signalanteil über den Kondensator 11 zum Empfangsfilter 12. Zur weiteren Auswertung wird das am Ausgang des Empfangsfilters 12 erhaltene Signal 13 der digitalen Signalverarbeitungseinheit 6 zugeführt. Vorzugsweise ist die digitale Signalverarbeitungseinheit 6 durch eine galvanische Barriere 14 vom Rest der Feldbuseinheit galvanisch getrennt. Die galvanische Barriere kann beispielsweise mit Hilfe von Optokopplern oder DC/DC-Konvertern realisiert sein.

Bei den Feldbuseinheiten des Stands der Technik trat das Problem auf, dass beim Hochstarten des Feldgeräts noch kein Basisstrom I_{Basis} vorhanden war und der Stromsteuertransistor T1 deshalb sperrte. Deshalb wurde die Busspannung V_{Bus} nicht zur Versorgungsleitung 2 durchgeschaltet. Als Folge davon konnten der Stromkontroller 5, die Referenzspannungseinheit 10, der Empfangsfilter 12 und die digitale Signalverarbeitungseinheit 6 nicht mit Strom versorgt werden. Insofern konnte auch kein Stromsteuersignal 4 für die Ansteuerschaltung 3 erzeugt werden. Um die Feldbuseinheit trotzdem hochstarten zu können, war deshalb bei einigen Lösungen des Stands der Technik ein Bypass 15 vorgesehen, der den sperrenden Transistor T1 beim Hochstarten überbrückte und dem Stromkontroller 5 sowie der Referenzspannungseinheit 10 die Busspannung V_{Bus} zuführte. Dadurch wurde der Stromkontroller 5 in die Lage versetzt, ein Stromsteuersignal 4 zu liefern, es begann ein Basisstrom I_{Basis} zu fließen, und der Transistor T1 wurde durchgeschaltet.

Diese Lösung mit Hilfe eines Bypass 15, der beim Hochstarten aktiviert wird, hat jedoch einige gravierende Nachteile. Bei der erfindungsgemäßen Lösung wird daher auf den Bypass 15 verzichtet. Um die Feldbuseinheit auch ohne einen derartigen Bypass hochstarten zu können, wird bei der erfindungsgemäßen Lösung die Ansteuerschaltung 3 derart modifiziert, dass sie beim Hochstarten, also bei nicht-vorhandenem Stromsteuersignal 4, bereits leitet und somit ein Basisstrom I_{Basis} fließt. Dies steht im Gegensatz zu den bisher verwendeten Ansteuerschaltungen, die sich beim Hochstarten im gesperrten Zustand befanden, wobei erst dann ein Basisstrom zu fließen begann, wenn ein Stromsteuersignal 4 zur Verfügung gestellt wurde. Die erfindungsgemäße Ansteuerschaltung 3 ist so ausgelegt, dass ohne Stromsteuersignal 4 bereits ein Basisstrom fließt, wobei das Stromsteuersignal 4 dazu dient, den anfangs fließenden Basisstrom I_{Basis} zu verringern. Bei den Lösungen des Stands der Technik war es so, dass ein anfangs nicht fließender Basisstrom erst mit zunehmendem Stromsteuersignal 4 zu fließen begann.

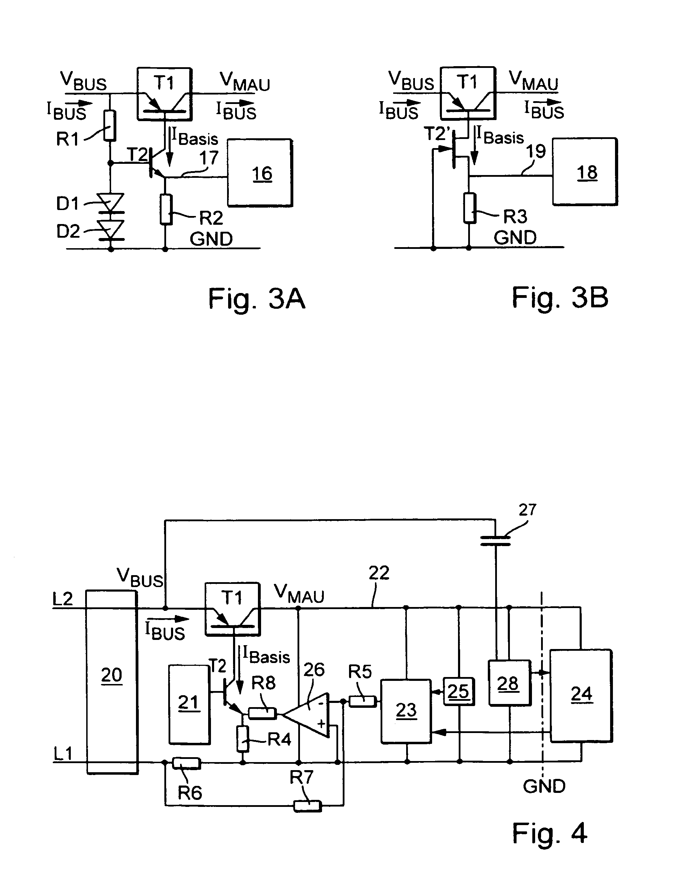

In den Fig. 3A und 3B sind zwei mögliche Ausführungsformen einer erfindungsgemäßen Ansteuerschaltung gezeigt. Bei der in Fig. 3A gezeigten Variante wird ein Bipolartransistor T2 als Ansteuertransistor für den Stromsteuertransistor T1 verwendet. Anders als bei den Lösungen des Stands der Technik wird die Basis des Ansteuertransistors T2 auf ein konstantes Potenzial gelegt. Bei der in Fig. 3A gezeigten Lösung ist die Basis von T2 über zwei jeweils in Durchlassrichtung geschaltete Dioden D1, D2 mit dem Schaltungsnullpunkt GND verbunden. Außerdem ist die Basis von T2 über einen Widerstand R1 von beispielsweise 1 MΩ mit der Busspannung V_{Bus} verbunden. Da an jeder der beiden Dioden D1, D2 eine Spannung von ca. 0,5 V abfällt, befindet sich die Basis von T2 auf einem konstanten Potenzial von ca. +1 V gegenüber dem Schaltungsnullpunkt GND.

Die Basis des Stromsteuertransistors T1 ist über die Emitter-Kollektor-Strecke von T2 und den strombegrenzenden Widerstand R2 mit dem Schaltungsnullpunkt GND verbunden. Da sich die Basis von T2 auf einem positiven Potenzial von ca. +1 V befindet, fließt ein Ansteuerstrom über Basis und Emitter von T2, und als Folge dieses Ansteuerstroms fließt ein Basisstrom I_{Basis} über die Kollektor-Emitter-Strecke von T2 und den strombegrenzenden Widerstand R2. Der Basisstrom I_{Basis} fließt auch dann, wenn der Stromkontroller 16 inaktiv ist und kein Stromsteuersignal 17 zur Verfügung stellt. Dies ist beispielsweise beim Hochfahren der Fall, weil der Stromkontroller 16 beim Hochfahren noch nicht mit Strom versorgt wird. Bei der erfindungsgemäßen Ansteuerschaltung ist bereits beim Hochfahren ein Basisstrom I_{Basis} vorhanden, der den Transistor T1 durchschaltet und den verschiedenen Komponenten der Feldbuseinheit die benötigte Versorgungsspannung V_{MAU} zur Verfügung stellt. Bei Verwendung der in Fig. 3A gezeigten Ansteuerschaltung kann der bislang verwendete Bypass 15 ersatzlos entfallen.

Bei der in Fig. 3A gezeigten Schaltung fließt von Anfang an ein Basisstrom I_{Basis}. Der Grund dafür ist, dass die Basis von T2 auf konstantem Potenzial gehalten wird, der Transistor T2 also in Basisschaltung betrieben wird, statt wie bei bisherigen Lösungen in Emitterschaltung. Während das Stromsteuersignal 17 bei den Lösungen des Stands der Technik mit der Basis von T2 verbunden wurde, wird das Stromsteuersignal 17 jetzt in den Emitter-Kollektor-Strompfad von T2 eingekoppelt, um den Basisstrom I_{Basis} zu modulieren. Da der Basisstrom I_{Basis} bereits dann fließt, wenn der Stromkontroller 15 keine Versorgungsspannung erhält, kann die Feldbuseinheit ohne Komplikationen hochstarten. Sobald die Feldbuseinheit hochgestartet ist, kann der Stromkontroller 16 mit Hilfe des Stromsteuersignals 17 den Basisstrom I_{Basis} und damit auch den durch die gesamte Feldbuseinheit fließenden Strom I_{Bus} kontrollieren und modulieren. Insbesondere kann durch Einspeisen eines Stromsteuersignals 17 am Knoten zwischen dem Emitter von T2 und dem Widerstand R2 der Spannungsabfall an R2 erhöht und als Folge davon der Basisstrom I_{Basis} verringert werden.

Durch Verwendung dieser veränderten Ansteuerschaltung kann der bislang verwendete Bypass 15 ersatzlos entfallen, so dass die Schaltung wesentlich vereinfacht wird. Ein weiterer Vorteil ist, dass die Ansteuerschaltung auf einem IC integriert werden kann. Bei den bisherigen Lösungen des Stands der Technik, die einen Bypass erforderten, war es notwendig, der Ansteuerschaltung die Busspannung V _{Bus} zuzuführen. Da die Busspannung vergleichsweise hoch ist (z.B. bis zu 35 V), muss der IC in einer besonderen Chiptechnologie hergestellt werden, die eine solche Spannung tragen kann. Diese Komplikationen entfallen bei der erfindungsgemäßen Lösung, die sich sehr gut auf einen IC unterbringen lässt.

Bei Verwendung eines Bypass ist es darüber hinaus erforderlich, den Bypass nach dem Hochstarten des Feldgeräts abzuschalten. Alternativ dazu kann der Bypass auch aktiv bleiben, in diesem Fall müsste aber der vom Bypass aufgenommene Strom konstant gehalten werden, um die Strommodulation auf dem Feldbus nicht zu beeinträchtigen. All dies führt zu schaltungstechnischen Komplikationen. Diese Komplikationen können durch Einsatz der erfindungsgemäßen Feldbuseinheit vermieden werden.

Ein weiterer Vorteil der erfindungsgemäßen Ansteuerschaltungen ist, dass ein in Basisschaltung betriebener Ansteuertransistor T2 keine zusätzliche Stromverstärkung verursacht, da das Stromsteuersignal unmittelbar in den Emitter-Kollektor-Strompfad eingespeist wird. Bei den Ansteuerschaltungen des Stands der Technik wurde der Ansteuertransistor T2 in Emitterschaltung betrieben, welche durch einen Stromverstärkungsfaktor β2 von ca. 20 bis 400 gekennzeichnet ist. Dies bedeutet, dass ein an der Basis von T2 anliegendes Stromsteuersignal einen um den Faktor 20 bis 400 höheren Emitter-Kollektor-Strom hervorruft, der dann als Basisstrom die Basis des Stromsteuertransistors T1 ansteuert. Da auch T1 eine Stromverstärkung β1 von ca. 20 bis 400 aufweist, ergibt sich die Gesamtverstärkung des Systems zu β1 x β2. Wegen dieser eigentlich zu hohen Stromverstärkung führen kleinste Schwankungen des Stromsteuersignals zu starken Schwankungen des Busstroms I_{Bus}. Außerdem wird der Rauschpegel des an der Basis von T2 anliegenden Steuersignals ebenfalls mit verstärkt, so dass sich insgesamt eine instabile und ungenaue Steuerung des Busstroms I_{Bus} ergibt.

Diese Probleme werden bei der erfindungsgemäßen Ansteuerschaltung dadurch vermieden, dass der Ansteuertransistor T2 in Basisschaltung betrieben wird. Da das Stromsteuersignal in dem Emitter-Kollektor-Strompfad von T2 eingespeist wird, ist die Stromverstärkung β2 des Ansteuertransistors T2 gleich 1. Das vom Stromkontroller 16 gelieferte Stromsteuersignal liegt daher in derselben Größenordnung wie der Basisstrom I_{Basis} zur Ansteuerung von T1. Dadurch wird eine vergleichsweise präzise Stromsteuerung ermöglicht. Insbesondere wird vermieden, dass Schwankungen und Rauschpegel des Stromsteuersignals 17 unangemessen stark hochverstärkt werden.

Infolge der verbesserten Genauigkeit der erfindungsgemäßen Ansteuerschaltung wird auch die dynamische Impedanz der Stromregelung verbessert. Die dynamische Impedanz ist definiert als Quotient einer auf den Feldbus aufmodulierten Spannungsvariation ΔU und der dadurch verursachten Stromvariation ΔI. Je schneller die Stromregelung den Strom nachregelt, desto kleiner wird ΔI, und desto größer wird die dynamische Impedanz. Die dynamische Impedanz misst also die Schnelligkeit der Stromnachregelung. Bei Profibus-PA und Fieldbus Foundation muss die dynamische Impedanz im Frequenzbereich zwischen 7.8kHz und 39 kHz größer als 3 kΩ sein - gemäß IEC61158-2 Norm, Abschnitt 12.5.2. Diese Vorgabe lässt sich mit der erfindungsgemäßen Ansteuerschaltung wesentlich leichter erfüllen als mit den Schaltungen des Stands der Technik.

In Fig. 3B ist eine alternative Ausführungsform der Erfindung gezeigt, bei der als Ansteuertransistor T2* ein Feldeffekttransistor eingesetzt wird. Der Gate-Anschluss des Ansteuertransistors T2* wird auf ein konstantes Potenzial gesetzt. Als Feldeffekttransistor wird vorzugsweise ein Junction-FET, abgekürzt JFET, eingesetzt. Bei einem derartigen JFET ist die Source-Drain-Strecke bereits dann auf Durchlass geschaltet, wenn der Gate-Anschluss mit dem Schaltungsnullpunkt GND verbunden ist. Die Basis des Stromsteuertransistors T1 ist über die Source-Drain-Strecke von T2* und den strombegrenzenden Widerstand R3 mit dem Schaltungsnullpunkt GND verbunden. Bei der in Fig. 3B gezeigten Schaltungsanordnung fließt bereits dann ein Basisstrom I_{Basis}, wenn der Stromkontroller 18 inaktiv ist und kein Stromsteuersignal 19 in den Source-Drain-Strompfad einspeist. Die Ansteuerschaltung stellt also auch dann einen Basisstrom I_{Basis} zur Verfügung, wenn der Stromkontroller 18 noch nicht mit Strom versorgt wird. Durch diesen von Anfang an fließenden Basisstrom I_{Basis} wird der Stromsteuertransistor T1 durchgeschaltet, so dass dem Feldgerät die Versorgungsspannung V_{MAU} zur Verfügung gestellt wird. Sobald der Stromkontroller 18 mit Strom versorgt wird, liefert er ein Stromsteuersignal 19, das in dem Source-Drain-Strompfad von T2* eingespeist wird und den Busstrom I_{Bus} moduliert. Insbesondere kann durch Einspeisen eines Stromsteuersignals 19 am Knoten zwischen dem Drain von T2* und dem Widerstand R3 der Spannungsabfall an R3 erhöht und als Folge davon der Basisstrom I_{Basis} verringert werden.

In Fig. 4 ist die bereits in Fig. 2 gezeigte Schaltung einer Feldbuseinheit nochmals detailliert dargestellt. Die zwei Leiter L1, L2 des Feldbusses werden über die Entstör- und Gleichrichtereinheit 20 an die Feldbuseinheit angeschlossen. Am Emitter des Stromsteuertransistors T1 liegt daher die Busspannung V_{Bus} an. Durch die Schaltung 21 wird die Basis des Ansteuertransistors T2 auf ein festgelegtes Potenzial gelegt, so dass bereits beim Hochstarten des Feldgeräts ein Basisstrom I_{Basis} über die Kollektor-Emitter-Strecke von T2 und dem strombegrenzenden Widerstand R4 fließen kann. Daher wird der Stromsteuertransistor T1 beim Hochstarten durchgeschaltet, und an der Versorgungsleitung 22 steht eine Versorgungsspannung V_{MAU} zur Verfügung.

Um Daten, insbesondere Messdaten, auf dem Feldbus zu senden, wird dem von Feldgerät aufgenommenen Strom eine Strommodulation aufgeprägt. Die aufzumodulierenden Daten werden dem Profibus-Signalgenerator 23 von der digitalen Signalverarbeitungseinheit 24 zur Verfügung gestellt. Die Referenzspannungseinheit 25 stellt eine oder mehrere Referenzspannungen zur Verfügung. Der Profibus-Signalgenerator 23 erzeugt ein analoges Steuersignal, das über den Widerstand R5 am invertierenden Eingang des Operationsverstärkers 26 anliegt. Der Spannungsabfall am Strommesswiderstand R6 wird über den Widerstand R7 zum invertierenden Eingang des Operationsverstärkers 26 rückgekoppelt. Der nicht-invertierende Eingang des Operationsverstärkers 26 ist mit dem Schaltungsnullpunkt GND verbunden. Am Ausgang des Operationsverstärkers 26 wird ein zur Differenz der beiden Eingänge proportionales Stromsteuersignal erzeugt, das über den Widerstand R8 in den Kollektor-Emitter-Strompfad des Ansteuertransistors T2 eingekoppelt wird. Auf diese Weise wird der Basisstrom I_{Basis} und damit auch der Busstrom I_{Bus} entsprechend dem von der digitalen Signalverarbeitungseinheit 24 gelieferten Digitalsignal moduliert.

Die in Fig. 4 gezeigte Feldbuseinheit umfasst darüber hinaus Vorrichtungen zur Auswertung von auf Seiten des Masters auf die Busspannung V_{Bus} aufmodulierten Spannungsmodulationen. Diese Spannungsmodulationen gelangen über den Kondensator 27 zum Empfangsfilter 28 und werden dann durch die digitale Signalverarbeitungseinheit 24 ausgewertet.

## Patentansprüche

1. Feldbuseinheit zum Anschluss eines Feldgeräts an einen zwei Leiter (L1, L2) umfassenden Feldbus, wobei die Feldbuseinheit dazu ausgelegt ist, durch Modulation eines vom Feldgerät aufgenommenen Stroms ein Signal über den Feldbus zu übertragen, wobei die Feldbuseinheit aufweist:
- einen Stromsteuertransistor (T1), durch den der vom Feldgerät aufgenommene Strom fließt, wobei der vom Feldgerät aufgenommene Strom über einen Basisstrom des Stromsteuertransistors (T1) gesteuert wird,
- einen Stromkontroller (5, 16), der ein Stromsteuersignal (4, 17) zur Steuerung des vom Feldgerät aufgenommenen Stroms erzeugt,
**dadurch gekennzeichnet, dass**
- ein Bipolartransistor (T2) vorgesehen ist, der als Ansteuertransistor dient und in Basisschaltung betrieben wird, und über dessen Emitter-Kollektor-Strompfad der Basisstrom zur Ansteuerung des Stromsteuertransistors (T1) fließt,
- die Basis des Bipolartransistors (T2) auf ein im wesentlichen konstantes Potenzial gelegt ist, welches so gewählt ist, dass der Bipolartransistor (T2) dem Stromsteuertransistor (T1) einen zum Hochstarten des Feldgeräts ausreichenden Basisstrom zuführt, wenn der Stromkontroller (5, 16) nicht mit Strom versorgt ist und kein Stromsteuersignal (4, 17) liefert, und
- der Stromkontroller (5, 16) das Stromsteuersignal (4, 17) über den Emitter-Kollektor-Strompfad des Bipolartransistors (T2) einspeist.

2. Feldbuseinheit nach Anspruch 1, **dadurch gekennzeichnet, dass** der Bipolartransistor (T2) dem Stromsteuertransistor (T1), wenn der Stromkontroller nicht mit Strom versorgt ist und kein Stromsteuersignal liefert, einen Basisstrom zur Verfügung stellt, der hinreichend groß ist, um den Stromsteuertransistor (T1) durchzuschalten und das Feldgerät mit Strom zu versorgen.

3. Feldbuseinheit nach einem der vorhergehenden Ansprüche, **dadurch gekennzeichnet, dass** die Basis des Bipolartransistors (T2) mithilfe von einer oder mehreren in Reihe geschalteten, in Durchlassrichtung gepolten Dioden (D1, D2) auf ein gegenüber dem Schaltungsnullpunkt positives Potenzial gesetzt ist.

4. Feldbuseinheit nach einem der vorhergehenden Ansprüche, **dadurch gekennzeichnet, dass** die Basis des Stromsteuertransistors (T1) über die Emitter-Kollektor-Strecke des Bipolartransistors (T2) und einen strombegrenzenden Widerstand (R2) mit einem Schaltungsnullpunkt der Feldbuseinheit verbunden ist.

5. Feldbuseinheit nach einem der vorhergehenden Ansprüche, **dadurch gekennzeichnet, dass** es sich bei dem Bipolartransistor (T2) um einen npn-Transistor handelt, und dass der Emitter-Anschluss des Bipolartransistors (T2) über einen strombegrenzenden Widerstand (R2) mit dem Schaltungsnullpunkt verbunden ist.

6. Feldbuseinheit nach einem der vorhergehenden Ansprüche, **dadurch gekennzeichnet, dass** es sich bei dem Bipolartransistor (T2) um einen npn-Transistor handelt, und dass der Stromkontroller (5, 16) dazu ausgelegt ist, das Stromsteuersignal (4, 17) am Emitter des Bipolartransistors (T2) einzuspeisen.

7. Feldgerät zum Anschluss an einen zwei Leiter umfassenden Feldbus, welches eine Feldbuseinheit nach einem der Ansprüche 1 bis 6 umfasst.

8. Feldbuseinheit zum Anschluss eines Feldgeräts an einen zwei Leiter (L1, L2) umfassenden Feldbus, wobei die Feldbuseinheit dazu ausgelegt ist, durch Modulation eines vom Feldgerät aufgenommenen Stroms ein Signal über den Feldbus zu übertragen, wobei die Feldbuseinheit aufweist:
- einen Stromsteuertransistor (T1), durch den der vom Feldgerät aufgenommene Strom fließt, wobei der vom Feldgerät aufgenommene Strom über einen Basisstrom des Stromsteuertransistors (T1) gesteuert wird,
- einen Stromkontroller (5, 18), der ein Stromsteuersignal (4, 19) zur Steuerung des vom Feldgerät aufgenommenen Stroms erzeugt,
**gekennzeichnet durch**
- einen Feldeffekttransistor (T2*), der als Ansteuertransistor dient und in Basisschaltung betrieben wird, und_über dessen Source-Drain-Strompfad der Basisstrom zur Ansteuerung des Stromsteuertransistors (T1) fließt,
- wobei der Gate-Anschluss des Feldeffekttransistors (T2*) auf ein im wesentlichen konstantes Potenzial gelegt ist, welches so gewählt ist, dass der Feldeffekttransistor (T2*) dem Stromsteuertransistor (T1) einen zum Hochstarten des Feldgeräts ausreichenden Basisstrom zuführt, wenn der Stromkontroller (5, 18) nicht mit Strom versorgt ist und kein Stromsteuersignal (4, 19) liefert, und
- wobei der Stromkontroller (5, 18) das Stromsteuersignal (4, 19) über den Source-Drain-Strompfad des Feldeffekttransistors (T2*) einspeist.

9. Feldbuseinheit nach Anspruch 8, **dadurch gekennzeichnet, dass** der Feldeffekttransistor (T2*) dem Stromsteuertransistor (T1), wenn der Stromkontroller nicht mit Strom versorgt ist und kein Stromsteuersignal liefert, einen Basisstrom zur Verfügung stellt, der hinreichend groß ist, um den Stromsteuertransistor (T1) durchzuschalten und das Feldgerät mit Strom zu versorgen.

10. Feldbuseinheit nach einem der Ansprüche 8 bis 9, **dadurch gekennzeichnet, dass** es sich bei dem Feldeffekttransistor (T2*) um einen Junction-FET, abgekürzt JFET, handelt, dessen Source-Drain-Strecke leitet, wenn der Gate-Anschluss mit dem Schaltungsnullpunkt verbunden ist.

11. Feldbuseinheit nach einem der Ansprüche 8 bis 10, **dadurch gekennzeichnet, dass** die Basis des Stromsteuertransistors (T1) über die Source-Drain-Strecke des Feldeffekttransistors (T2*) und einen strombegrenzenden Widerstand (R3) mit einem Schaltungsnullpunkt der Feldbuseinheit verbunden ist.

12. Feldbuseinheit nach einem der Ansprüche 8 bis 10, **dadurch gekennzeichnet, dass** der Gate-Anschluss des Feldeffekttransistors (T2*) mit dem Schaltungsnullpunkt verbunden ist.

13. Feldbuseinheit nach einem der Ansprüche 8 bis 10, **dadurch gekennzeichnet, dass** der Drain-Anschluss des Feldeffekttransistors (T2*) über einen strombegrenzenden Widerstand (R3) mit dem Schaltungsnullpunkt verbunden ist.

14. Feldbuseinheit nach einem der Ansprüche 8 bis 10, **dadurch gekennzeichnet, dass** der Stromkontroller (5, 18) dazu ausgelegt ist, das Stromsteuersignal (4, 19) am Drain-Anschluss des Feldeffekttransistors (T2*) einzuspeisen.

15. Feldgerät zum Anschluss an einen zwei Leiter umfassenden Feldbus, welches eine Feldbuseinheit nach einem der Ansprüche 8 bis 14 umfasst.

## Claims

1. Fieldbus unit for connecting a field device to a fieldbus comprising two conductors (L1, L2), wherein the fieldbus unit is designed to transmit a signal via the fieldbus by modulating a current received by the field device, wherein the fieldbus unit comprises:
- a current control transistor (T1) through which the current received by the field device flows, wherein the current received by the field device is controlled via a base current of the current control transistor (T1),
- a current controller (5, 16) which generates a current control signal (4, 17) to control the current received by the field device,
**characterized in that**
- a bipolar junction transistor (T2) is provided which acts as a drive transistor and is used in a base circuit, and the base current flows via the emitter-collector current path of said bipolar transistor to drive the current control transistor (T1),
- the base of the bipolar junction transistor (T2) is connected to a primarily constant potential which is selected in such a way that the bipolar junction transistor (T2) supplies the current control transistor (T1) with a base current sufficient for booting the field device when the current controller (5, 16) is not supplied with current and does not provide a current control signal (4, 17) and
- the current controller (5, 16) feeds in the current control signal (4, 17) via the emitter-collector current path of the bipolar junction transistor (T2).

2. Fieldbus unit as claimed in Claim 1, **characterized in that** the bipolar junction transistor (T2) provides the current control transistor (T1) with a base current large enough to switch the current control transistor (T1) and power the field device when the current controller is not supplied with current and does not provide a current control signal.

3. Fieldbus unit as claimed in one of the previous claims, **characterized in that** the base of the bipolar junction transistor (T2) is set to a positive potential relative to the ground using one or more diodes (D1, D2) which are switched in series and forward-biased.

4. Fieldbus unit as claimed in one of the previous claims, **characterized in that** the base of the current control transistor (T1) is connected to a ground of the fieldbus unit via the emitter-collector path of the bipolar junction transistor (T2) and a current-limiting resistor (R2).

5. Fieldbus unit as claimed in one of the previous claims, **characterized in that** the bipolar junction transistor (T2) is an NPN transistor, and **in that** the emitter terminal of the bipolar junction transistor (T2) is connected to the ground via a current-limiting resistor (R2).

6. Fieldbus unit as claimed in one of the previous claims, **characterized in that** the bipolar junction transistor (T2) is an NPN transistor, and **in that** the current controller (5, 16) is designed to feed in the current control signal (4, 17) at the emitter of the bipolar junction transistor (T2).

7. Field device for connecting to a fieldbus comprising two conductors, said fieldbus comprising a fieldbus unit as claimed in one of the claims 1 to 6.

8. Fieldbus unit for connecting a field device to a fieldbus comprising two conductors (L1, L2), wherein the fieldbus unit is designed to transmit a signal via the fieldbus by modulating a current received by the field device, wherein the fieldbus unit comprises:
- a current control transistor (T1) via which the current received by the field device flows, wherein the current received by the field device is controlled by a base current of the current control transistor (T1),
- a current controller (5, 18) which generates a current control signal (4, 19) to control the current received by the field device,
**characterized in that**
- a field effect transistor (T2*), which acts as a drive transistor and is used in a base circuit and via the transistor's source-drain current path the base current flows to drive the current control transistor (T1),
- wherein the gate terminal of the field effect transistor (T2*) is connected to a primarily constant potential which is selected in such a way that the field effect transistor (T2*) provides the current control transistor (T1) with enough base current to boot the field device when the current controller (5, 18) is not supplied with current and does not provide a current control signal (4, 19), and
- wherein the current controller (5, 18) feeds in the current control signal (4, 19) via the source-drain current path of the field effect transistor (T2*).

9. Fieldbus unit as claimed in Claim 8, **characterized in that** the field effect transistor (T2*) provides the current control transistor (T1) with a base current large enough to switch the current control transistor (T1) and power the field device when the current controller is not supplied with current and does not provide a current control signal.

10. Fieldbus unit as claimed in one of the Claims 8 to 9, **characterized in that** the field effect transistor (T2*) is a junction FET (JFET) whose source-drain path conducts when the gate terminal is connected to the ground.

11. Fieldbus unit as claimed in one of the Claims 8 to 10, **characterized in that** the base of the current control transistor (T1) is connected to a ground of the fieldbus unit via the source-drain path of the field effect transistor (T2*) and a current-limiting resistor (R3).

12. Fieldbus unit as claimed in one of the Claims 8 to 10, **characterized in that** the gate terminal of the field effect transistor (T2*) is connected to the ground.

13. Fieldbus unit as claimed in one of the Claims 8 to 10, **characterized in that** the drain terminal of the field effect transistor (T2*) is connected to the ground via a current-limiting resistor.

14. Fieldbus unit as claimed in one of the Claims 8 to 10, **characterized in that** the current controller (5, 18) is designed to feed in the current control signal (4, 19) at the drain terminal of the field effect transistor (T2*).

15. Field device for connection to a fieldbus comprising two conductors, said fieldbus comprising a fieldbus unit as claimed in one of the Claims 8 to 14.

## Revendications

1. Unité de bus de terrain destinée au raccordement d'un appareil de terrain à un bus de terrain comprenant deux fils (L1, L2), l'unité de bus de terrain étant conçue de telle manière à transmettre via le bus de terrain un signal, par la modulation d'un courant absorbé par l'appareil de terrain, l'unité de bus de terrain comportant :
- un transistor de commande de courant (T1), par l'intermédiaire duquel circule le courant absorbé par l'appareil de terrain, le courant absorbé par l'appareil de terrain étant commandé par l'intermédiaire d'un courant de base du transistor de commande de courant (T1),
- un contrôleur de courant (5, 16), qui génère un signal de commande de courant (4, 17) pour la commande du courant absorbé par l'appareil de terrain,
**caractérisé en ce**
- **qu'**est prévu un transistor bipolaire (T2), qui sert de transistor d'amorçage et est utilisé dans le circuit de base, et par l'intermédiaire duquel circule, à travers sa jonction émetteur-collecteur, le courant de base destiné à amorcer le transistor de commande de courant (T1),
- **que** la base du transistor bipolaire (T2) est fixée à un potentiel pour l'essentiel constant, lequel est sélectionné que telle manière que le transistor bipolaire (T2) fournit au transistor de commande de courant (T1) un courant de base suffisant pour le démarrage de l'appareil de terrain, lorsque le contrôleur de courant (5, 16) n'est pas alimenté en courant et ne fournit pas de signal de commande de courant (4, 17), et
- **que** le contrôleur de courant (5, 16) injecte le signal de commande de courant (4, 17) par l'intermédiaire de la jonction émetteur-collecteur du transistor bipolaire (T2).

2. Unité de bus de terrain selon la revendication 1, **caractérisée en ce que** le transistor bipolaire (T2) met à la disposition du transistor de commande de courant (T1), lorsque le contrôleur de courant n'est pas alimenté en courant et ne fournit pas de signal de commande de courant, un courant de base soit suffisamment important pour commuter le transistor de commande de courant (T1) et alimenter en courant l'appareil de terrain.

3. Unité de bus de terrain selon l'une des revendications précédentes, **caractérisée en ce que** la base du transistor bipolaire (T2) est fixée à un potentiel positif par rapport au point de référence (masse) du circuit à l'aide d'une ou de plusieurs diodes (D1, D2) couplées en série, polarisées dans le sens passant.

4. Unité de bus de terrain selon l'une des revendications précédentes, **caractérisée en ce que** la base du transistor de commande de courant (T1) est reliée par l'intermédiaire de la jonction émetteur-collecteur du transistor bipolaire (T2) et une résistance limitatrice de courant (R2) avec un point de référence (masse) du circuit de l'unité de bus de terrain.

5. Unité de bus de terrain selon l'une des revendications précédentes, **caractérisée en ce que**, concernant le transistor bipolaire (T2), il s'agit d'un transistor NPN, et que l'émetteur du transistor bipolaire (T2) est relié par l'intermédiaire d'une résistance limitatrice de courant (R2) avec le point de référence (masse) du circuit.

6. Unité de bus de terrain selon l'une des revendications précédentes, **caractérisée en ce que**, concernant le transistor bipolaire (T2), il s'agit d'un transistor NPN, et que le contrôleur de courant (5, 16) est conçu de telle manière à injecter le signal de commande de courant (4, 17) au niveau de l'émetteur du transistor bipolaire (T2).

7. Appareil de terrain destiné au raccordement à un bus de terrain comprenant deux conducteurs, lequel comporte une unité de bus de terrain selon l'une des revendications 1 à 6.

8. Unité de bus de terrain destinée au raccordement d'un appareil de terrain à un bus de terrain comprenant deux conducteurs (L1, L2), l'unité de bus de terrain étant conçue de telle manière à transmettre un signal via le bus de terrain, par la modulation d'un courant absorbé par l'appareil de terrain, l'unité de bus de terrain comprenant :
- un transistor de commande de courant (T1), par l'intermédiaire duquel circule le courant absorbé par l'appareil de terrain, le courant absorbé par l'appareil de terrain étant commandé par l'intermédiaire d'un courant de base du transistor de commande de courant (T1),
- un contrôleur de courant (5, 18), qui génère un signal de commande de courant (4, 19) pour la commande du courant absorbé par l'appareil de terrain,
**caractérisé par**
- un transistor à effet de champ (T2*), qui sert de transistor d'amorçage et est utilisé dans le circuit de base, et par l'intermédiaire duquel circule, à travers sa jonction source-drain, le courant de base destiné à l'amorçage du transistor de commande de courant (T1),
- la grille du transistor à effet de champ (T2*) étant fixée à un potentiel pour l'essentiel constant, lequel est sélectionné que telle manière que le transistor à effet de champ (T2*) fournit au transistor de commande de courant (T1) un courant de base suffisant pour le démarrage de l'appareil de terrain, lorsque le contrôleur de courant (5, 18) n'est pas alimenté en courant et ne fournit pas de signal de commande de courant (4, 19), et
- le contrôleur de courant (5, 18) injectant le signal de commande de courant (4, 19) par l'intermédiaire de la jonction source-drain du transistor à effet de champ (T2*).

9. Unité de bus de terrain selon la revendication 8, **caractérisée en ce que** le transistor à effet de champ (T2*) met à la disposition du transistor de commande de courant (T1), lorsque le contrôleur de courant n'est pas alimenté en courant et ne fournit pas de signal de commande de courant, un courant de base suffisamment important pour commuter le transistor de commande de courant (T1) et alimenter en courant l'appareil de terrain.

10. Unité de bus de terrain selon l'une des revendications 8 à 9, **caractérisée en ce que**, concernant le transistor à effet de champ (T2*), il s'agit d'un FET à jonctions, JFET en abrégé, dont la jonction source-drain est passante lorsque la grille est reliée avec le point de référence (masse) du circuit.

11. Unité de bus de terrain selon l'une des revendications 8 à 10, **caractérisée en ce que** la base du transistor de commande de courant (T1) est reliée par l'intermédiaire de la jonction source-drain du transistor à effet de champ (T2*) et une résistance limitatrice de courant (R3) avec un point de référence (masse) du circuit de l'appareil de terrain.

12. Unité de bus de terrain selon l'une des revendications 8 à 10, **caractérisée en ce que** la grille du transistor à effet de champ (T2*) est reliée avec le point de référence (masse) du circuit.

13. Unité de bus de terrain selon l'une des revendications 8 à 10, **caractérisée en ce que** le drain du transistor à effet de champ (T2*) est relié par l'intermédiaire d'une résistance limitatrice de courant (R3) avec un point de référence (masse) du circuit.

14. Unité de bus de terrain selon l'une des revendications 8 à 10, **caractérisée en ce que** le contrôleur de courant (5, 18) est conçu de telle manière à injecter le signal de commande de courant (4, 19) au niveau du drain du transistor à effet de champ (T2*).

15. Appareil de terrain destiné au raccordement à un bus de terrain comprenant deux conducteurs, lequel appareil de terrain comprend une unité de bus de terrain selon l'une des revendications 8 à 14.
